# EUROPÄISCHE PATENTSCHRIFT

(11) **EP 0 718 538 B1**
(45) Veröffentlichungstag und Bekanntmachung des Hinweises auf die Patenterteilung: **17.06.1998**
(21) Anmeldenummer: 95117969.6
(22) Anmeldetag: 15.11.1995
(51) Int. Cl.: F16L 37/14, F16L 37/084

(54) **Steckverbindung**
Plug coupling
Raccord enfichables

(30) Priorität: 20.12.1994 DE 9420380 U
(43) Veröffentlichungstag der Anmeldung: 26.06.1996
(73) Patentinhaber: ARMATURENFABRIK HERMANN VOSS GMBH & CO., D-51688 Wipperfürth (DE)
(72) Erfinder: Goller, Bernd, D-51688 Wipperfürth (DE)
(74) Vertreter: Patentanwälte Dr. Solf & Zapf

(56) Entgegenhaltungen:
- EP-A- 0 146 157
- EP-A- 0 185 802
- US-A- 4 186 946

## Beschreibung

Die vorliegende Erfindung betrifft eine Steckverbindung mit einem eine Aufnahmeöffnung zum Einstecken eines Steckerteils aufweisenden Gehäuseteil, wobei innerhalb der Aufnahmeöffnung in einer Innenringnut ein radialelastischer, zum Arretieren des Steckerteils bereichsweise in eine an diesem vorhandene Außenringnut eingreifender Haltering gelagert ist.

Derartige Steckverbindungen sind aus zahlreichen Veröffentlichungen hinlänglich bekannt. Beispielsweise beschreibt die EP-B-0 300 023 eine solche Steckverbindung, wobei aber nachteilig ist, daß der als Drahtsprengring ausgebildete Haltering insbesondere bei "liegender", d.h. nicht vertikaler Anordnung der Steckachse vor dem Einstecken des Steckerteils innerhalb der Ringkammer exzentrisch verrutschen kann, was dann aber das Einstecken des Steckerteils behindert. Um letzteres zu vermeiden, ist daher am Steckerteil ein Außenkonus vorhanden, der zum (Wieder)Zentrieren und zum Aufweiten des Sprengringes dient. Bedingt durch den Außenkonus weist aber die gesamte Steckverbindung nachteiligerweise eine relativ große Baulänge auf.

Eine ähnliche Schnellverbindungskupplung ist aus der DE-OS 27 48 157 bekannt. Auch hierbei muß ein Verschluß- bzw. Sicherungsring im Falle eines exzentrischen Verrutschens beim Steckvorgang erst wieder durch eine Schräge bzw. einen Konus des Steckers zentriert werden.

Der vorliegenden Erfindung liegt die Aufgabe zugrunde, eine Steckverbindung der gattungsgemäßen Art zu schaffen, die sich durch besonders kompakte Bauform, insbesondere Baulänge, auszeichnet, dabei aber dennoch in jeder beliebigen Raumorientierung liegend problemlos gesteckt werden kann.

Erfindungsgemäß wird dies durch ein in einer Ringkammer des Gehäuseteils gelagertes, den Haltering bezüglich der Steckachse zentrierendes Positionierelement erreicht. Hierbei liegt das Positionierelement zum Zwecke der Zentrierung des Halteringes an mindestens drei Stellen von dessen Umfang an diesem an, wobei das Positionierelement zudem derart federelastisch ausgebildet ist, daß es beim Einsteckvorgang durch elastische Verformung ein radiales Aufweiten sowie ein anschließendes Zurückfedern des Halteringes ermöglicht.

Durch die erfindungsgemäße Ausgestaltung kann sich vorteilhafterweise ein ausgeprägter Außenkonus am Steckerteil erübrigen. Am Steckerteil braucht lediglich eine geringfügige Anfasung vorhanden zu sein, um das radiale Aufweiten des Halteringes beim Steckvorgang zu bewirken. Durch den sich somit erübrigenden "Zentrier- und Positionierkonus" wird die Baulänge erheblich reduziert. Dennoch wird auch bei liegender Anordnung der Steckverbindung der Haltering stets zentrisch gehalten, so daß der Steckvorgang stets problemlos möglich ist.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: einen Axialschnitt durch eine erfindungsgemäße Steckverbindung im gesteckten, arretierten Zustand des Steckerteils,
- Fig. 2: eine Darstellung analog zu Fig. 1, jedoch geringfügig verkleinert, während des Einsteckens des Steckerteils vor dem Beginn des Aufweitens des Halteringes,
- Fig. 3: eine vergrößerte Draufsicht eines erfindungsgemäßen Positionierelementes,
- Fig. 4: eine teil-axialgeschnittene Seitenansicht in Pfeilrichtung IV gemäß Fig. 3 und
- Fig. 5: eine stark vergrößerte Ansicht der Einzelheit x in Fig. 4.

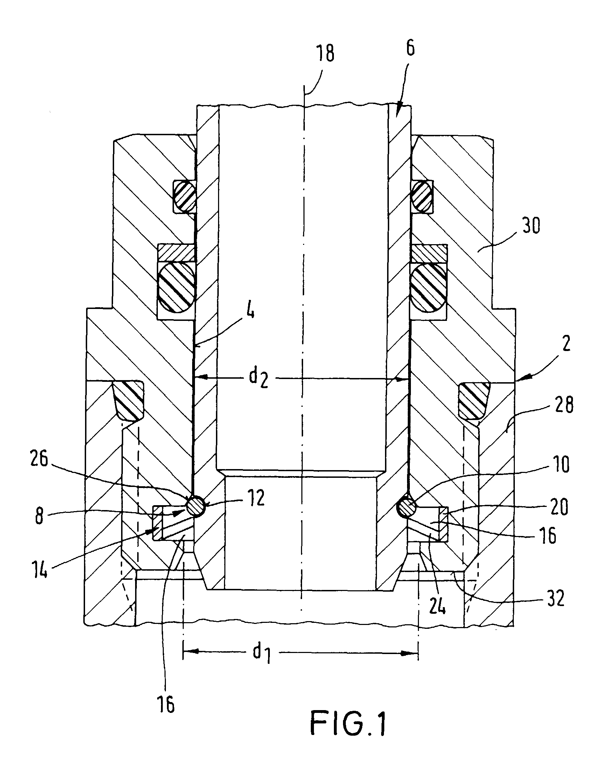

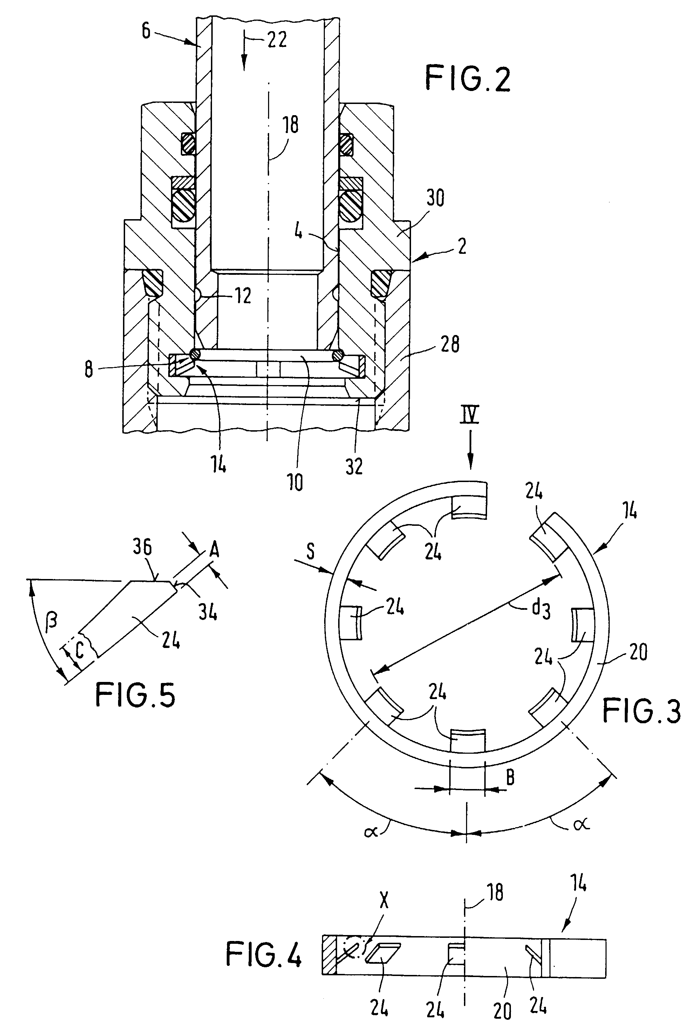

Wie sich zunächst aus Fig. 1 und 2 jeweils ergibt, besteht eine erfindungsgemäße Steckverbindung hauptsächlich aus einem Gehäuseteil 2 mit einer Aufnahmeöffnung 4 zum Einstecken eines Steckerteils 6. Innerhalb der Aufnahmeöffnung 4 ist in einer Innenringnut 8 ein radialelastischer Haltering 10 gelagert, der beim Einstecken des Steckerteils 6 radial elastisch aufweitbar ist und dann zum Arretieren des Steckerteils 6 bereichsweise in eine an diesem vorhandene Außenringnut 12 einrastet. Dieser Zustand ist in Fig. 1 veranschaulicht.

Der Haltering 10 ist bevorzugt als an sich bekannter, geschlitzter Drahtsprengring insbesondere mit kreisförmigem Drahtquerschnitt ausgebildet. Alternativ hierzu ist es jedoch ebenfalls möglich, den Haltering 10 als umfänglich geschlossenen Federring auszubilden; hierbei handelt es sich um ein ringförmiges Federelement, wie es beispielsweise bei Wellendichtringen verwendet wird (dünne gewickelte Schraubenfeder, die dann in Ringform gebracht wird).

Um nun ein exzentrisches Verrutschen des Halteringes 10 in der Innenringnut 8 zu verhindern, ist erfindungsgemäß ein neuartiges Positionierelement 14 vorgesehen (siehe hierzu auch Fig. 3 bis 5), welches in einer inneren Ringkammer 16 des Gehäuseteils 2 gelagert ist und an dem Haltering 10 bereichsweise anliegt, um diesen bezüglich der Steckachse 18 zumindest annähernd zu zentrieren. Zu diesem Zweck handelt es sich zumindest um eine Dreipunktanlage des Positionierelementes 14 an dem Haltering 10, wobei die drei Anlagepunkte insbesondere gleichmäßig über den Ringumfang verteilt angeordnet sind. Hierbei ist nun das Positionierelement 14 derart federelastisch ausgebildet, daß es beim Einsteckvorgang durch elastisches Verformung ein radiales Aufweiten sowie ein anschließendes Zurückfedern des Halteringes 10 ermöglicht.

Wie sich nun insbesondere aus Fig. 3 bis 5 ergibt, ist das Positionierelement 14 bevorzugt als geschlitzter Ringkörper 20 mit sich radial nach innen sowie schräg zur Steckachse 18 in Richtung des Halteringes 10 und entgegen der Einsteckrichtung (Pfeil 22) erstreckenden, fingerartigen Positionierlamellen 24 ausgebildet. Im dargestellten, besonders vorteilhaften Ausführungsbeispiel sind acht Positionierlamellen 24 in einer gleichmäßig über den Umfang des Ringkörpers 20 verteilten Anordnung vorgesehen. Hierdurch ergibt sich ein Winkelabstand zwischen den einzelnen Positionierlamellen 24 von jeweils α = 45°. Hierauf ist die Erfindung jedoch keineswegs beschränkt.

Wie am besten in Fig. 1 zu erkennen ist, geht die das Positionierelement 14 aufnehmende innere Ringkammer 16 des Gehäuseteils 2 in der der Einsteckrichtung 22 entgegengesetzten Richtung über eine Anfasung 26 in die Aufnahmeöffnung 4 über, wobei der Haltering 10 von dem Positionierelement 14 derart im Bereich der Anfasung 26 gehalten wird, daß er bei seiner beim Steckvorgang auftretenden radialen Aufweitung in die Ringkammer 16 ausweicht. Nachfolgend federt der Haltering 10 jedoch wieder zurück, um in die Außenringnut 12 des Steckerteils 6 einzurasten, wobei der Haltering 10 dann wieder im Bereich der Anfasung 26 liegt. Insofern bildet die Anfasung 26 somit die eigentliche Innenringnut 8, die aber durch das erfindungsgemäße Positionierelement 14 stets so begrenzt wird, daß ein exzentrisches Verrutschen des Halteringes 10 praktisch ausgeschlossen ist.

Bei der erfindungsgemäßen Steckverbindung handelt es sich aufgrund der Ausgestaltung und Anordnung des Halteringes 10 grundsätzlich um eine unlösbare Verbindung. Um nun aber doch eine Lösbarkeit der Verbindung zu erreichen, besteht das Gehäuseteil 2 vorzugsweise zweiteilig aus einem Basisteil 28 und einem lösbar mit diesem verbundenen Einsatzteil 30. Zweckmäßigerweise ist das Einsatzteil 30 mit einem Außengewinde in ein Innengewinde des Basisteils 28 lösbar eingeschraubt.

Hierbei ist nun in der dargestellten Ausführungsform vorgesehen, daß die Ringkammer 16 für das Positionierelement 14 in der Nähe des in das Basisteil 28 eingesetzten Stirnendes 32 des Einsatzteils 30 angeordnet ist. Hierdurch kann bei der Montage der Einzelteile der erfindungsgemäßen Steckverbindung das Positionierelement 14 von der Seite des Stirnendes 32 her in die Ringkammer 16 eingesetzt werden. Dies ist aufgrund der Schlitzung möglich, durch die das Positionierelement 14 bzw. der Ringkörper 20 auch im Durchmesser reduziert werden kann. Hierbei ist es nun besonders vorteilhaft, daß aufgrund der erfindungsgemäßen Ausgestaltung, d.h. insbesondere aufgrund der erfindungsgemäßen Positionierung des Halteringes 10, der die Ringkammer 16 in Richtung des eingesetzten Stirnendes 32 begrenzende Abschnitt einen Innendurchmesser d₁ aufweisen kann, der größer als der Innendurchmesser d₂ der Aufnahmeöffnung 4 ist. Dieses Merkmal trägt zu einem besondere einfachen Einsetzen des Positionierelementes 14 in die Ringkammer 16 bei, da die Ringkammer 16 gut zugänglich ist.

Ein Lösen der Verbindung ist somit dadurch möglich, daß das Einsatzteil 30 vom Basisteil 28 gelöst und gemeinsam mit dem Steckerteil 6 entnommen wird.

In einer nicht dargestellten Ausführungsform kann alternativ bezüglich der Lösbarkeit der Verbindung auch vorgesehen sein, daß die Ringkammer 16 zwischen dem Einsatzteil 30 und dem Basisteil 28 gebildet bzw. begrenzt wird. Beispielsweise kann die Ringkammer 16 zwischen dem Stirnende 32 des Einsatzteils und einer axial gegenüberliegenden Ringstufe des Basisteils 28 gebildet sein.

Das erfindungsgemäße Positionierelement 14 besteht vorzugsweise einstückig aus Kunststoff, insbesondere aus Polyamid. In einer realisierten Ausführung weist der Ringkörper 20 einen Außendurchmesser von etwa 17 mm und eine axial gemessene Dicke von etwa 1,8 mm auf. Jede Positionierlamelle 24 besitzt vorzugsweise in Umfangsrichtung gesehen eine Breite B von etwa 1,5 mm (s. Fig. 3). Wie sich aus der vergrößerten Darstellung in Fig. 5 ergibt, weist jede Positionierlamelle 24 an ihrem freien Ende vorzugsweise eine spezielle Kontur auf, die das Positionieren des Halteringes 10 und auch dessen Radialbewegungen begünstigt. Hierzu besitzt jede Positionierlamelle 24 zunächst eine Stirnendfläche 34, die senkrecht zur Längserstreckung der Positionierlamelle 24 verläuft. Die Stirnendfläche 34 geht in Richtung der Außenseite der Positionierlamelle 24 in eine Übergangsfläche 36 über, die vorzugsweise zumindest annähernd senkrecht zur Steckachse 18 angeordnet ist. Hierdurch schließt die Übergangsfläche 36 mit der Längserstreckung der Positionierlamelle 24 einen spitzen Winkel β ein. Die Breite A der Stirnendfläche 34 beträgt in einer realisierten Ausführungsform bevorzugt nur etwa 0,2 mm. Der Winkel β beträgt etwa 45°. Die Dicke C (s.Fig. 5) der Positionierlamelle 24 in radialer Richtung beträgt etwa 0,4 mm. Die radiale Stärke S des Ringkörpers 20 (Fig. 3) beträgt vorzugsweise etwa 0,4 mm. Die Positionierlamellen 24 enden mit ihren freien Enden im unverformten Zustand auf einem Kreis mit einem Durchmesser d₃ von vorzugsweise etwa 13 mm (Fig. 3).

## Patentansprüche

1. Steckverbindung mit einem eine Aufnahmeöffnung (4) zum Einstecken eines Steckerteils (6) aufweisenden Gehäuseteil (2), wobei innerhalb der Aufnahmeöffnung (4) in einer Innenringnut (8) ein radialelastischer, zum Arretieren des Steckerteils (6) bereichsweise in eine an diesem vorhandene Außenringnut (12) eingreifender Haltering (10) gelagert ist,
**gekennzeichnet durch** ein in einer Ringkammer (16) des Gehäuseteils (2) gelagertes, den Haltering (10) bezüglich der Steckachse (18) zentrierendes Positionierelement (14).

2. Steckverbindung nach Anspruch 1,
**dadurch gekennzeichnet**, daß das Positionierelement (14) an mindestens drei Stellen des Umfanges an dem Haltering (10) anliegt und derart federelastisch ausgebildet ist, daß es beim Einsteckvorgang durch elastische Verformung ein radiales Aufweiten und ein anschließendes Zurückfedern des Halteringes (10) ermöglicht.

3. Steckverbindung nach Anspruch 1 oder 2,
**dadurch gekennzeichnet,** daß das Positionierelement (14) als geschlitzter Ringkörper (20) mit sich radial nach innen sowie schräg zur Steckachse (18) in Richtung des Halteringes (10) erstreckenden Positionierlamellen (24) ausgebildet ist.

4. Steckverbindung nach einem oder mehreren der Ansprüche 1 bis 3,
**dadurch gekennzeichnet**, daß die das Positionierelement (14) aufnehmende innere Ringkammer (16) des Gehäuseteils (2) in der der Einsteckrichtung (22) entgegengesetzten Richtung über eine Anfasung (26) in die Aufnahmeöffnung (4) übergeht, wobei der Haltering (10) von dem Positionierelement (14) derart im Bereich der Anfasung (26) gehalten wird, daß er bei seiner beim Steckvorgang auftretenden radialen Aufweitung in Richtung der Ringkammer (16) ausweicht.

5. Steckverbindung nach einem oder mehreren der Ansprüche 1 bis 4,
**dadurch gekennzeichnet**, daß der Haltering (10) als geschlitzter Drahtsprengring insbesondere mit kreisförmigem Drahtquerschnitt ausgebildet ist.

6. Steckverbindung nach einem oder mehreren der Ansprüche 1 bis 4,
**dadurch gekennzeichnet**, daß der Haltering (10) als umfänglich geschlossener Federring ausgebildet ist.

7. Steckverbindung nach einem oder mehreren der Ansprüche 1 bis 6,
**dadurch gekennzeichnet**, daß das Gehäuseteil (2) zwecks Lösbarkeit der Verbindung zweiteilig aus einem Basisteil (28) und einem lösbar mit diesem verbundenen Einsatzteil (30) besteht.

8. Steckverbindung nach Anspruch 7,
**dadurch gekennzeichnet**, daß das Einsatzteil (30) mit einem Außengewinde in ein Innengewinde des Basisteils (28) eingeschraubt ist.

9. Steckverbindung nach Anspruch 7 oder 8,
**dadurch gekennzeichnet,** daß die Ringkammer (16) für das Positionierelement (14) in der Nähe des in das Basisteil (28) eingesetzten Stirnendes (32) des Einsatzteils (30) angeordnet ist, wobei vorzugsweise der die Ringkammer (16) in Richtung des eingesetzten Stirnendes (32) begrenzende Abschnitt einen Innendurchmesser (d₁) aufweist, der größer als der Durchmesser (d₂) der Aufnahmeöffnung (4) ist.

10. Steckverbindung nach Anspruch 7 oder 8,
**dadurch gekennzeichnet**, daß die Ringkammer (16) für das Positionierelement (14) zwischen dem Einsatzteil (30) und dem Basisteil (28) gebildet ist.

## Claims

1. Plug-in connection having a housing part (2) which has a receiving opening (4) into which a plug part (6) can be plugged, there being mounted within the receiving opening (4), in an inner annular groove (8), a radially elastic retaining ring (10) which, for the purpose of arresting the plug part (6), engages, in certain regions, in an outer annular groove (12) provided on said plug part, characterized by a positioning element (14) which is mounted in an annular chamber (16) of the housing part (2) and centres the retaining ring (10) with respect to the plug axis (18).

2. Plug-in connection according to Claim 1, characterized in that the positioning element (14) butts against the retaining ring (10) at at least three circumferential locations and is designed in a resilient manner such that, during the plug-in operation, it allows, by virtue of elastic deformation, the retaining ring (10) to widen radially and then spring back.

3. Plug-in connection according to Claim 1 or 2, characterized in that the positioning element (14) is designed as a split annular body (20) with positioning lamellae (24) which extend radially inwards and, obliquely with respect to the plug axis (18), in the direction of the retaining ring (10).

4. Plug-in connection according to one or more of Claims 1 to 3, characterized in that, in the direction counter to the plug-in direction (22), the inner annular chamber (16) of the housing part (2), said chamber receiving the positioning element (14), merges into the receiving opening (4) via a bevel (26), the retaining ring (10) being retained, by the positioning element (14), in the region of the bevel (26) such that, when it widens radially during the plug-in operation, it yields in the direction of the annular chamber (16).

5. Plug-in connection according to one or more of claims 1 to 4, characterized in that the retaining ring (10) is designed as a split wire snap ring, in particular with a circular wire cross-section.

6. Plug-in connection according to one or more of Claims 1 to 4, characterized in that the retaining ring (10) is designed as a spring ring which is closed over the circumference.

7. Plug-in connection according to one or more of Claims 1 to 6, characterized in that, for the purpose of releasing the connection, the housing part (2) is made in two parts and comprises a base part (28) and an insert part (30) which is connected releasably to said base part.

8. Plug-in connection according to Claim 7, characterized in that the insert part (30) is screwed, by way of an external thread, into an internal thread of the base part (28).

9. Plug-in connection according to Claim 7 or 8, characterized in that the annular chamber (16) for the positioning element (14) is arranged in the vicinity of the end (32) of the insert part (30), said end being inserted into the base part (28), it being the case that preferably the section which bounds the annular chamber (16) in the direction of the inserted end (32) has an internal diameter (d₁) which is greater than the diameter (d₂) of the receiving opening (4).

10. Plug-in connection according to Claim 7 or 8, characterized in that the annular chamber (16) for the positioning element (14) is formed between the insert part (30) and the base part (28).

## Revendications

1. Raccord enfichable comportant un élément de boîtier (2) présentant une ouverture d'accueil (4) pour l'enfichage d'un élément de fiche (6), une bague de maintien (10) élastique dans la direction radiale étant disposée dans une rainure annulaire interne (8) de l'ouverture d'accueil (4), certaines régions de cette bague s'insérant dans une rainure annulaire externe (12) prévue sur l'élément de fiche (6) pour arrêter ce dernier,
caractérisé par un élément de positionnement (14) disposé dans une chambre annulaire (16) de l'élément de boîtier (2), et centrant la bague de maintien (10) par rapport à l'axe d'enfichage (18).

2. Raccord enfichable selon la revendication 1,
caractérisé en ce que l'élément de positionnement (14) est appliqué sur la bague de maintien (10) en au moins trois endroits de la périphérie, et est élastique de manière à permettre un élargissement radial par déformation élastique de la bague de maintien (10) lors du processus d'enfichage, et un retour élastique consécutif.

3. Raccord enfichable selon la revendication 1 ou 2,
caractérisé en ce que l'élément de positionnement (14) est un corps annulaire fendu (20) comportant des languettes de positionnement (24) s'étendant radialement vers l'intérieur, et obliquement par rapport à l'axe d'enfichage (18), dans la direction de la bague de maintien (10).

4. Raccord enfichable selon l'une ou plusieurs des revendications 1 à 3,
caractérisé en ce que la chambre annulaire interne (16) de l'élément de boîtier (2) accueillant l'élément de positionnement (14) est prolongée dans la direction opposée à la direction d'enfichage 22, par l'ouverture d'accueil (4) en passant par un chanfrein (26), la bague de maintien (10) étant maintenue par l'élément de positionnement (14) dans la région du chanfrein (26), de manière à ce qu'elle s'écarte dans la direction de la chambre annulaire (16) lors d'un écartement radial se produisant au moment du processus d'enfichage.

5. Raccord enfichable selon l'une ou plusieurs des revendications 1 à 4,
caractérisé en ce que la bague de maintien (10) est un anneau de retenue métallique fendu, en particulier à section transversale circulaire.

6. Raccord enfichable selon l'une ou plusieurs des revendications 1 à 4,
caractérisé en ce que la bague de maintien (10) est une bague élastique fermée sur sa périphérie.

7. Raccord enfichable selon l'une ou plusieurs des revendications 1 à 6,
caractérisé en ce que, pour assurer une liaison amovible, l'élément de boîtier (2) est formé en deux parties, à savoir un élément de base (28), et un élément rapporté (30) relié de manière amovible au premier élément.

8. Racccord enfichable selon la revendication 7,
caractérisé en ce que l'élément rapporté (30) est vissé par un filet dans le taraudage de l'élément de base (28).

9. Raccord enfichable selon la revendication 7 ou 8,
caractérisé en ce que la chambre annulaire (16) pour l'élément de positionnement (14) est disposée au voisinage de l'extrémité frontale (32) de l'élément rapporté (30), insérée dans l'élément de base (28), la section délimitant la chambre annulaire (16) dans la direction de l'extrémité frontale (32) insérée ayant de préférence un diamètre interne (d₁) supérieur au diamètre (d₂) de l'ouverture d'accueil (4).

10. Raccord enfichable selon la revendication 7 ou 8,
caractérisé en ce que la chambre annulaire (16) pour l'élément de positionnement (14) est formée entre l'élément rapporté (30) et l'élément de base (28).
